# EUROPEAN PATENT APPLICATION

(11) **EP 3 291 059 A1**
(43) Date of publication of application: **07.03.2018**
(21) Application number: 17187883.8
(22) Date of filing: 25.08.2017
(51) Int. Cl.: G06F 3/01, G06F 3/0346

(54) **DISPLAY SYSTEM OPERABLE IN A NON-CONTACT MANNER**

(30) Priority: 05.09.2016 JP 2016173078
(71) Applicant: Toshiba TEC Kabushiki Kaisha, Tokyo 141-8562 (JP)
(72) Inventor: SAITOU, Takahiro, Shinagawa-ku, Tokyo 141-8562 (JP)
(74) Representative: Takeuchi, Maya

(57) **Abstract**

A display system operable in a non-contact manner includes a display, a wireless communication module, a plurality of user-wearable devices, and a control device. Each of the user-wearable devices is attachable to or around a user's hand, associated with a unique identifier, and is configured to detect a hand gesture made by the user's hand and wirelessly transmit data corresponding to the detected hand gesture along with the unique identifier. The control device is configured to activate operation of the display by one of the user-wearable devices, upon the wireless communication module receiving data of a first predetermined hand gesture from said one of the user-wearable devices, and control the display to display a display element unique to said one of the user-wearable devices, upon activation of the operation thereby.

## Description

### FIELD

Embodiments described herein relate generally to a display system operable in a non-contact manner.

### BACKGROUND

In the related art, there is a technique for recognizing a motion (e.g., gesture) of a user's hands, fingers, and the like in a non-contact manner based on a measurement value obtained from a sensor attached to a specific body part such as the user's arm (in particular, wrist). According to the technique, a pointer disposed on a screen of a personal computer (PC) or the like is moved corresponding to the recognized motion, and an operation corresponding to a position of the pointer can be performed. With such a display system operable in a non-contact manner, since the system can be operable without a user touching any object, the operation can be carried out hygienically.

However, in a situation where multiple users are authorized to operate the display system, it may be difficult for each user to recognize which user's operation is reflected on a screen.

To this end, there is provided a display system operable in a non-contact manner, comprising: a display; a wireless communication module; a plurality of user-wearable devices, each of which is attachable to or around a user's hand, associated with a unique identifier, and is configured to detect a hand gesture made by the user's hand and wirelessly transmit data corresponding to the detected hand gesture to the wireless communication module along with the unique identifier; and a control device configured to: activate operation of the display by one of the user-wearable devices, upon the wireless communication module receiving data of a first predetermined hand gesture from said one of the user-wearable devices; control the display to display a display element unique to said one of the user-wearable devices, upon activation of the operation thereby; and change display contents of the display while the operation is activated, based on data of a second predetermined hand gesture transmitted from said one of the user-wearable devices and received by the wireless communication module.

Preferably, the display element includes a background screen.

Preferably, a color of the background screen is unique to said one of the user-wearable devices.

Preferably, the display element includes a pointer.

Preferably, at least one of a color and a shape of the pointer is unique to said one of the user-wearable devices.

Preferably, the display element includes a display area indicating user attribute information.

Preferably, the control device activates the operation by said one of the user-wearable devices, when operation by no other user-wearable devices are activated.

Preferably, the control device is further configured to deactivate the operation of the display by said one of the user-wearable devices, upon the wireless communication module receiving data of a third predetermined hand gesture along with the unique identifier from said one of the user-wearable devices.

The present invention further relates to a display system operable in a non-contact manner, comprising: a display; a wireless communication module; an image capturing device; and a control device configured to: biometrically authenticate a user through an image of the user captured by the image capturing device; activate operation of the display by the user, upon the image capturing device capturing an image of a first predetermined gesture made by the user; control the display to display a display element unique to the user, upon activation of the operation by the user; and change display contents of the display while the operation is activated, upon the image capturing device capturing an image of a second predetermined gesture made by the user.

Preferably, the display element includes a background screen.

Preferably, a color of the background screen is unique to the user.

Preferably, the display element includes a pointer.

Preferably, at least one of a color and a shape of the pointer is unique to the user.

Preferably, the display element includes a display area indicating user attribute information.

Preferably, the control device activates the operation by the user, when operation by no other users is activated.

Preferably, the control device is further configured to deactivate the operation of the display by the user, upon the image capturing device capturing an image of a third predetermined gesture made by the user.

The present invention further relates to a method for operating a display device in a non-contact manner, comprising: detecting, by a user-wearable device attached to or around a user's hand, a first predetermined hand gesture made by the user's hand; wirelessly transmitting data corresponding to the first predetermined hand gesture along with a unique identifier of the user-wearable device, from the user-wearable device to a wireless communication module coupled to a display device; activating operation of the display by the user-wearable device, upon the wireless communication module receiving the data of the first predetermined hand gesture along with the unique identifier; controlling the display device to display a display element unique to the user-wearable device, upon activation of the operation thereby; and changing display contents of the display device based on data of a second predetermined hand gesture that is wirelessly transmitted along with the unique identifier from the user-wearable device and received by the wireless communication module.

Preferably, the operation by the user-wearable device is activated when no user-wearable device is activated.

The method may further comprise: deactivating the operation of the display by the user-wearable device, upon the wireless communication module receiving data of a third predetermined hand gesture along with the unique identifier from the user-wearable device.

The method may further comprise: while the operation by the user-wearable device is activated, prevent activating operation of the display by other user-wearable devices, even upon the wireless communication module receiving data of the first predetermined hand gesture from said other user-wearable devices.

### DESCRIPTION OF THE DRAWINGS

FIG. 1 illustrates a configuration of an operation input device according to an embodiment.
FIG. 2 illustrates an example of an operation screen displayed by a display unit.
FIG. 3 illustrates a configuration of functional units included in the operation input device according to the embodiment.
FIG. 4 illustrates an example of a gesture.
FIG. 5 illustrates another example of the operation screen displayed by the display unit.
FIG. 6 is a flowchart illustrating an example of an operation support process executed by the operation input device according to the embodiment.

### DETAILED DESCRIPTION

An exemplary embodiment provides a non-contact operation input device capable of easily distinguishing that which user's operation is reflected on a screen.

In general, according to an embodiment, a display system operable in a non-contact manner includes a display, a wireless communication module, a plurality of user-wearable devices, and a control device. Each of the user-wearable devices is attachable to or around a user's hand, associated with a unique identifier, and is configured to detect a hand gesture made by the user's hand and wirelessly transmit data corresponding to the detected hand gesture to the wireless communication module along with the unique identifier. The control device is configured to activate operation of the display by one of the user-wearable devices, upon the wireless communication module receiving data of a first predetermined hand gesture from said one of the user-wearable devices, control the display to display a display element unique to said one of the user-wearable devices, upon activation of the operation thereby, and change display contents of the display while the operation is activated, based on data of a second predetermined hand gesture transmitted from said one of the user-wearable devices and received by the wireless communication module.

Hereinafter, an operation input device and a program according to an exemplary embodiment of the present disclosure will be described in detail with reference to the drawings. In the embodiment described below, an embodiment of the present disclosure is applied to a kitchen display for displaying order contents that is used in a store such as restaurants, but embodiments of the present disclosure is not limited to the embodiment.

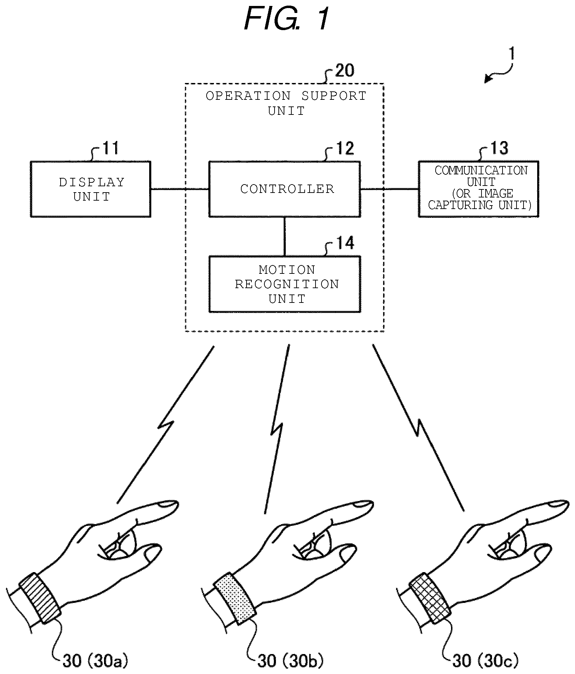

FIG. 1 illustrates a configuration of an operation input device 1 according to an embodiment. As illustrated in FIG. 1, the operation input device 1 includes a display unit 11, a controller 12, a communication unit 13, and a motion recognition unit 14. The controller 12, the communication unit 13, and the motion recognition unit 14 may be integrated with the display unit 11 or may be configured as separate units.

The display unit 11 includes a display device such as a liquid crystal display (LCD), an organic electro luminescence (EL), or the like. The display unit 11 is located at a back office such as a kitchen or the like and displays various kinds of information such as a menu name, under control of the controller 12. In the present embodiment, since it is assumed that a plurality of users (e.g., cooks, salespersons, and the like) operates the same display unit 11, it is preferable that the display unit 11 is located at a position (for example, above a wall or the like) at which the plurality of users can simultaneously observe.

The controller 12 includes a computer configuration such as a central processing unit (CPU), a graphics processing unit (GPU), a read only memory (ROM), a random access memory (RAM), and the like, and controls operation of the operation input device 1. In addition, the controller 12 functions as an operation support unit 20 together with the motion recognition unit 14 and controls a screen to be displayed on the display unit 11.

Specifically, the controller 12 performs control so as to cause the display unit 11 to display various operation screens (graphical user interface (GUI)) or information according to operation of the operation input device 1. For example, the controller 12 stores and manages order information received by the communication unit 13 and causes the display unit 11 to display an order display screen on which a menu name, the number of orders, a table number, and the like included in the order information are displayed.

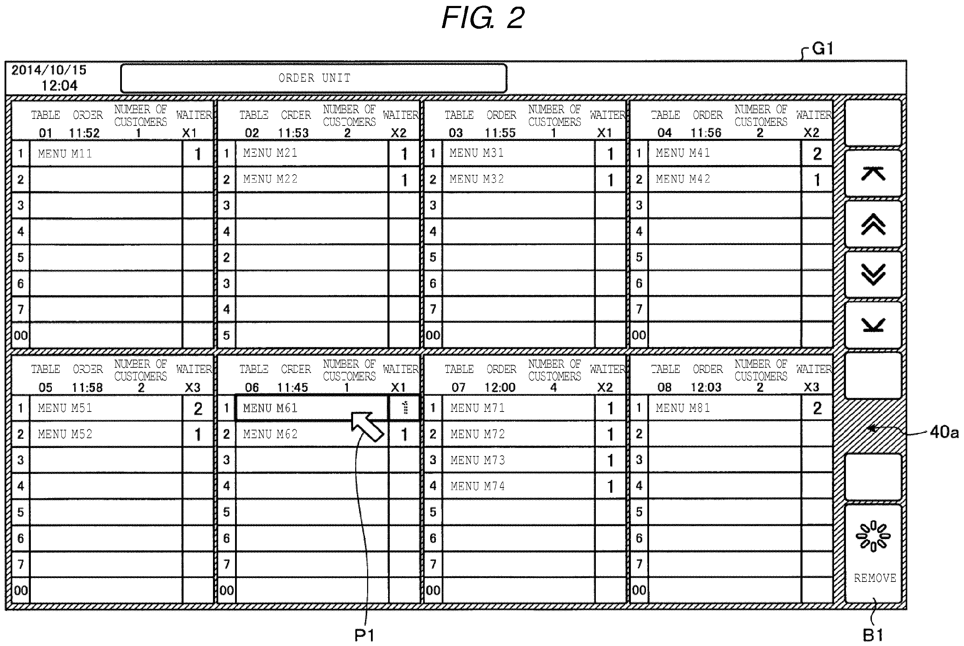

FIG. 2 illustrates an example of an operation screen displayed by the display unit 11. In an order display screen G1 illustrated in FIG. 2, a display area of one square is assigned per one order and a menu name and the number of orders included in each of orders are displayed in each of display areas. In addition, in an upper part of each of the display areas, a table number, an order time, the number of customers, and waiter's identifier are respectively displayed so as to identify each of orders.

By seeing the order display screen G1 displayed on the display unit 11, a user can check a current order status and perform cooking of an ordered menu. In addition, by using a function of the motion recognition unit 14 described below, the user can perform operations of the order display screen G1 in a non-contact manner. For example, when cooking or the like of an ordered menu is ended, by performing an operation (e.g., gesture) for removing the menu, the user can remove the corresponding menu from the order display screen G1.

In a case where removal of the menu is performed, for example, by performing a predetermined gesture such as moving a hand, the user moves a pointer P1 of a cursor or the like on a menu to be removed and selects the menu. Then, by moving the pointer P1 on a removal button B1 and selecting (e.g., by pressing) the removal button B1, the user instructs removal of the selected menu. When the removal operation of the menu described above is recognized by the motion recognition unit 14, the controller 12 removes the menu instructed by the removal operation from the order display screen G1. Here, the controller 12 may represent the menu which is a removal operation target with a broken line or the like (see menu M61 in FIG. 2). It is assumed that the order display screen G1 is configured so that a user can instruct various processes by moving the pointer P1 and selecting operators (e.g., menu, button, and the like).

Returning to FIG. 1, the communication unit 13 is a communication device performing wired or wireless communication. The communication unit 13 communicates with an order terminal (not illustrated) provided in a store and receives order information transmitted from the order terminal. This order terminal is, for example, carried by a salesperson and transmits order information input by the salesperson to the communication unit 13. In the order information, a table number, an order time, the number of customers, contact information of a salesperson who is in charge of a customer, and the like are included in addition to the menu name and the number of orders.

The motion recognition unit 14 includes a computer configuration such as a CPU, a GPU, a ROM, a RAM, and the like, various sensing devices, a wireless communication interface, and the like and recognizes a predetermined motion (e.g., gesture) performed by a user. In the present embodiment, the motion recognition unit 14 functions as the operation support unit 20 together with the controller 12 and receives an operation input for a screen displayed on the display unit 11 in a non-contact manner.

Specifically, by recognizing a gesture which is a predetermined motion by a user and cooperating with the controller 12, the motion recognition unit 14 receives an operation input for a screen displayed on the display unit 11 in a non-contact manner. For example, when the removal operation of the menu described above is recognized, by cooperating with the display unit 11, the motion recognition unit 14 removes the menu instructed by the removal operation from the order display screen G1. In the present embodiment, the controller 12 and the motion recognition unit 14 are separated from each other. However, the embodiments of the present disclosure are not limited thereto, and the controller 12 and the motion recognition unit 14 may be integrally configured with a common computer configuration.

A method for recognizing operation of a user is not particularly limited, and any technique of related art can be employed. The motion recognition unit 14 may be configured to recognize a face or a motion (for example, hand motion) of a user from a captured image of the user captured by an image capturing unit such as a charge coupled device (CCD) camera and an infrared camera. In this case, the communication unit 13 is replaced with the image capturing unit, and the motion recognition unit 14 determines whether or not the motion performed by the user corresponds to which gesture based on setting information indicating various types of gestures stored in ROM or the like of the motion recognition unit 14. Then, in a case where the motion of the user corresponds to any gesture, the motion recognition unit 14 recognizes that the gesture is performed by the user. As such a configuration, for example, a technique related to Intel Real Sense® or the like can be used.

In addition, for example, as illustrated in FIG. 1, the motion recognition unit 14 may be configured to recognize operation of a user together with a measurement value measured by a measuring device 30 attached to an arm (in particular, wrist) of the user. The measuring device 30 has various sensors for measuring, for example, acceleration, an angular velocity, earth magnetism, and the like. In addition, the measuring device 30 is attached to a specific part of a user which is a measurement target. The specific part is, for example, the user's arm, wrist, finger, head, leg, or the like. In FIG. 1, the measuring device 30 (30a, 30b, and 30c) is attached to the user's wrist.

In a case of being attached to the user's wrist, the measuring device 30 transmits acceleration or an angular velocity of a hand of the user wearing the measuring device 30 to the motion recognition unit 14 as a measurement value by wireless communication. The motion recognition unit 14 which receives the measurement value determines whether or not a motion of the user corresponding to the measurement value corresponds to which gesture based on setting information indicating various types of gestures stored in ROM or the like of the motion recognition unit 14. Then, in a case where the motion of the user corresponds to any gesture, the motion recognition unit 14 recognizes that the gesture is performed by the user. In the present embodiment, the measuring device 30 is used and the measuring device 30 is attached to the user's wrist.

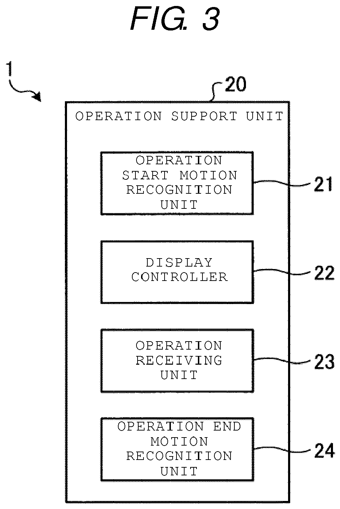

Next, a functional configuration of the operation input device 1 will be described. FIG. 3 illustrates an example of the functional configuration included in the operation input device 1. As illustrated in FIG. 3, the operation support unit 20 includes an operation start motion recognition unit 21, a display controller 22, an operation receiving unit 23, and an operation end motion recognition unit 24 as functional units. A part or all of these functional units may be a software configuration implemented using a RAM in cooperation with a processor (CPU or GPU) of either or both of the controller 12 and the motion recognition unit 14 and a program stored in a memory such as a ROM. In addition, a part or all of these functional units may be a hardware configuration implemented by one or a plurality of processing circuits or the like designed to perform each of functions.

When a gesture instructing a start of operation is performed by any one user, the operation start motion recognition unit 21 recognizes an operation start motion and identifies the user performing the motion. In addition, by giving operation authority to the user performing the operation start motion, the operation start motion recognition unit 21 validates an operation input to a screen displayed by the display unit 11.

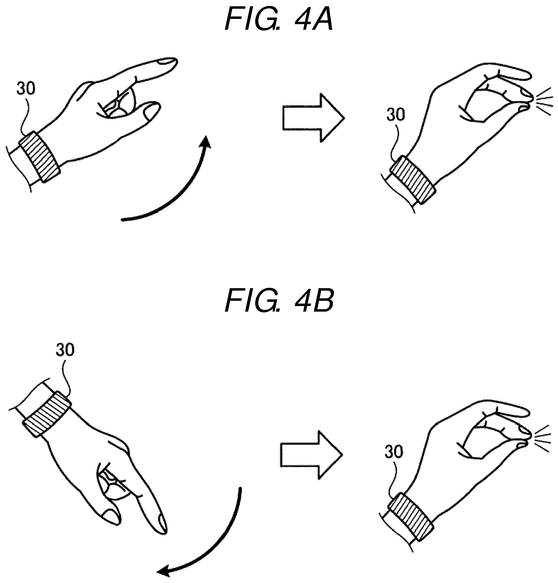

Here, the operation start motion is not limited thereto and an arbitrary operation can be set to the operation start motion. For example, as illustrated in FIG. 4A, a hand raising gesture followed by a gesture such as a finger snap may be the operation start motion. Here, the finger snap means a motion of lightly snapping a thumb and other fingers (e.g., middle finger and the like) in a gripping form. In a case where the motion of a user corresponds to an operation start motion, the operation start motion recognition unit 21 recognizes that the user performs the operation start motion based on setting information defining the operation start motion stored in ROM or the like.

In addition, identification method of an operator is not limited thereto and can adopt various methods. In the present embodiment, by causing the measuring device 30 to output a unique identifier assigned to each of measuring devices 30 together with a measurement value, a user wearing the measuring device 30 is identified based on the identifier. In addition, in a case of a configuration in which a motion is detected using a captured image, a user who instructs a start of operation may be identified through face recognition. During giving operation authority to one user, even if another user performs an operation start motion, the operation start motion recognition unit 21 performs exclusive control so that the number of users who operate an operation screen is one by preventing operation authority from being given to the other users.

The display controller 22 displays various operation screens (GUI) and information related to operation of the operation input device 1 on the display unit 11. For example, the display controller 22 displays the order display screen G1 (see FIG. 2) or the like described above on the display unit 11.

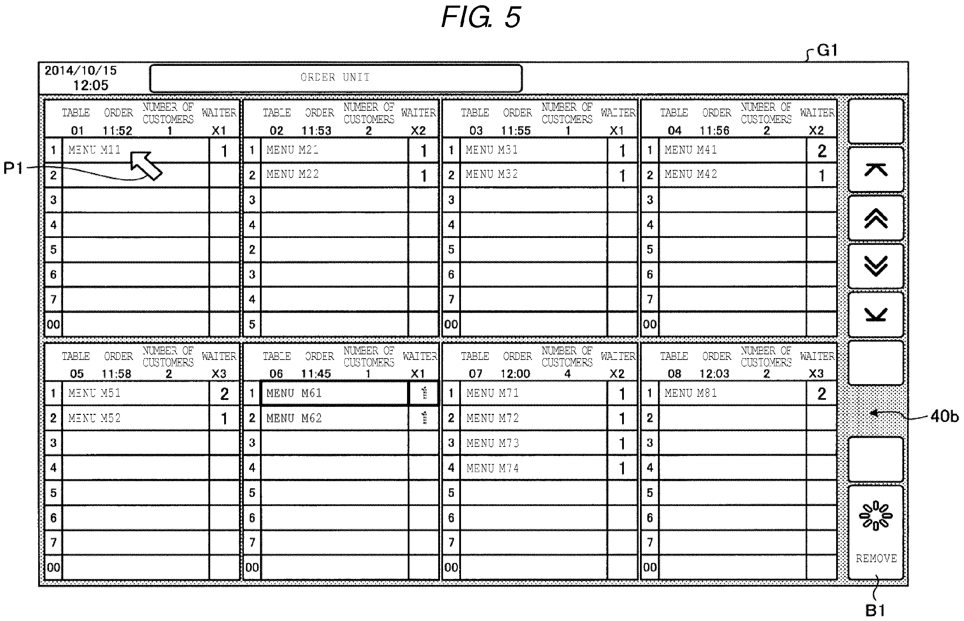

In addition, the display controller 22 changes a display form of the operation screen for each of operators. Specifically, the display controller 22 changes a display form of the order display screen G1 for each user to whom operation authority is given by the operation start motion recognition unit 21. A changing method of the display form is not limited thereto and can adopt various methods . For example, as illustrated in FIG. 5, the display controller 22 may change a background color of the order display screen G1 for each user to whom operation authority is given.

Here, FIG. 5 illustrates another example of the order display screen G1 displayed by the display unit 11 and corresponds to FIG. 2. The order display screen G1 illustrated in FIG. 5 corresponds to a status in which operation authority is given to a user different from the order display screen G1 illustrated in FIG. 2 and has a background color different from the order display screen G1 (see 40a in FIG. 2 and 40b in FIG. 5) . It is assumed that the background color of the order display screen G1 is predetermined in advance for each user and is maintained as setting information. In this case, for example, by setting a different color to a color of the measuring device 30 attached to each of the user, the display controller 22 may change the background color of the order display screen G1 to the color of the measuring device 30 attached to a user whose operation input is validated. Accordingly, it is possible to easily distinguish which user is operating, that is, which user's operation is reflected on a screen by the background color of the order display screen G1.

A target of changing a display color is not limited to a background of the order display screen G1. For example, a display color of the pointer P1 displayed inside the order display screen G1 may be changed for each user. In this case, it is assumed that the display color of the pointer P1 is predetermined in advance for each user and is stored as setting information. Accordingly, it is possible to easily distinguish which user is operating, that is, which user's operation is reflected on a screen by the display color of the pointer P1.

In addition, for example, the display controller 22 may change a shape of the pointer P1 displayed inside the order display screen G1 for each user to whom operation authority is given. In this case, it is assumed that the shape of the pointer P1 is predetermined in advance for each user and is stored as setting information. Accordingly, it is possible to easily distinguish which user is operating by the shape of the pointer P1.

In addition, for example, the display controller 22 may display user information such as a user name, a salesperson code, a face image, and the like representing a user to whom operation authority is given on the order display screen G1. In this case, it is assumed that the user information of each user is predetermined in advance for each user and is maintained as setting information. Accordingly, it is possible to easily distinguish which user is operating, that is, which user's operation is reflected on a screen by the user information displayed on the order display screen G1.

The operation receiving unit 23 monitors a motion of a user to whom operation authority is given. When recognizing that the user performs an operation start motion or a predetermined motion (e.g., gesture) other than an operation end motion described below, the operation receiving unit 23 receives an operation corresponding to the motion. Specifically, the operation receiving unit 23 determines whether or not the motion of the user corresponds to the predetermined motion. In a case where the motion of the user corresponds to the predetermined motion, the operation receiving unit 23 receives the operation corresponding to the motion. For example, when the user moves his or her hand in either of up, down, left, or right direction, the operation receiving unit 23 receives this movement direction as an operation instructing a movement of the pointer P1. In addition, when the user performs a motion such as finger snapping or the like, the operation receiving unit 23 receives this motion as an operation of selection or button press.

When a gesture instructing an end of operation is performed by a user to whom operation authority is given by the operation start motion recognition unit 21, the operation end motion recognition unit 24 recognizes the operation end motion. In addition, by releasing operation authority to the user performing the operation end motion, the operation end motion recognition unit 24 invalidates an operation input to a screen displayed by the display unit 11.

Here, the operation end motion is not limited thereto and an arbitrary operation can be set to the operation end motion in the same manner as the operation start motion. For example, as illustrated in FIG. 4B, after performing hand lowering operation, performing operation such as finger striking may be an operation end motion. In a case where a motion of a user corresponds to an operation end motion, the operation end motion recognition unit 24 recognizes that the user performs the operation end motion based on setting information indicating the operation end motion stored in ROM or the like.

With release of operation authority, the display controller 22 restores an operation screen displayed on the display unit 11 to a default display form, that is, a display form indicating that no user can operate any operation. For example, in a case where a background color of the order display screen G1 is changed, the display controller 22 restores the background color to a default background color. In addition, for example, in a case where a display color or a shape of the pointer P1 is changed, the display controller 22 removes display of the pointer P1 or restores the display color or the shape to a default display color or a default shape. In addition, for example, in a case where user information is displayed, the display controller 22 removes display of the user information or displays information indicating that no operator exists instead of the user information.

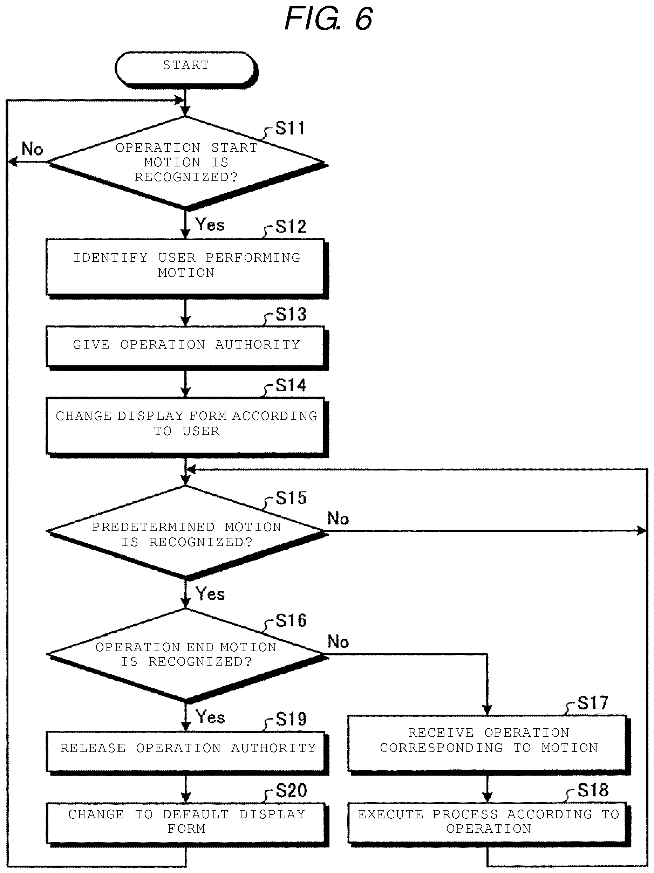

Hereinafter, an operation of the operation input device 1 of the configuration described above will be described. FIG. 6 is a flowchart illustrating an example of an operation support process executed by the operation input device 1. As a premise of the present process, it is assumed that an operation screen is displayed on the display unit 11 in a default display form by control of the display controller 22.

First, the operation start motion recognition unit 21 waits until an operation start motion is performed by any user (step S11; No) . When recognizing that the operation start motion is performed by any user (step S11; Yes), the operation start motion recognition unit 21 identifies the user performing the operation start motion (step S12). Next, the operation start motion recognition unit 21 gives operation authority to the user identified in step S12 and validates operation for an operation screen (step S13).

Continuously, the display controller 22 changes a display form of the operation screen according to the user to whom operation authority is given (step S14). Next, the operation support unit 20 waits until the user to whom operation authority is given performs a predetermined motion (step S15; No). When the predetermined motion is performed by the user, the operation support unit 20 determines whether or not the motion is an operation end motion (step S16).

In a case where a predetermined motion other than the operation end motion is recognized in step S16 (step S15; Yes -> step S16; No), the operation receiving unit 23 receives an operation corresponding to the predetermined motion (step S17). Then, by cooperating with the controller 12, the operation receiving unit 23 executes a process in accordance with the operation (step S18) and the process returns to step S15. For example, in a case where removal operation of a menu is performed, by cooperating with the controller 12, the operation receiving unit 23 removes the menu selected by the removal operation from the order display screen G1 in step S18.

On the other hand, when an operation end motion is recognized in step S16 (step S16; Yes), the operation end motion recognition unit 24 releases operation authority given to the user and invalidates an operation input for the operation screen (step S19). Then, the display controller 22 changes the display form of the operation screen to a default display form (step S20) and returns to step S11.

As described above, the operation input device 1 of the present embodiment makes the display form of the operation screen displayed on the display unit 11 different from each other for each of operators. As a result, in the operation input device 1, it is possible to easily distinguish which user's operation is reflected on a screen by operation of the plurality of users in a non-contact manner even in a case where the operation screen displayed on the display unit 11 is operated.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

For example, in the embodiment described above, an exclusive process of operation authority is performed so that only one user operates the operation screen, but the present embodiment is not limited thereto. For example, a plurality of users can simultaneously operate the operation screen. In this case, the operation start motion recognition unit 21 gives operation authority to each user performing the operation start motion. In addition, the display controller 22 changes the display form of the operation screen for each user to whom operation authority is given. Specifically, the display controller 22 makes the display color and the shape of the pointer P1 operated by the user different or makes the display color different when an operator such as a menu or the like is selected for each user to whom operation authority is given. Accordingly, it is possible to easily distinguish that which user's operation is reflected on a screen even in a case where the plurality of users simultaneously operates the operation screen displayed on the display unit 11.

## Claims

1. A display system operable in a non-contact manner, comprising:
a display;
a wireless communication module;
a plurality of user-wearable devices, each of which is attachable to or around a user's hand, associated with a unique identifier, and is configured to detect a hand gesture made by the user's hand and wirelessly transmit data corresponding to the detected hand gesture to the wireless communication module along with the unique identifier; and
a control device configured to:
activate operation of the display by one of the user-wearable devices, upon the wireless communication module receiving data of a first predetermined hand gesture from said one of the user-wearable devices;
control the display to display a display element unique to said one of the user-wearable devices, upon activation of the operation thereby; and
change display contents of the display while the operation is activated, based on data of a second predetermined hand gesture transmitted from said one of the user-wearable devices and received by the wireless communication module.

2. The display system according to claim 1, wherein the display element includes a background screen.

3. The display system according to claim 2, wherein a color of the background screen is unique to said one of the user-wearable devices.

4. The display system according to any one of claims 1 to 3, wherein the display element includes a pointer.

5. The display system according to claim 4, wherein at least one of a color and a shape of the pointer is unique to said one of the user-wearable devices.

6. The display system according to any one of claims 1 to 5, wherein the display element includes a display area indicating user attribute information.

7. The display system according to any one of claims 1 to 6, wherein the control device activates the operation by said one of the user-wearable devices, when operation by no other user-wearable devices are activated.

8. The display system according to any one of claims 1 to 7, wherein
the control device is further configured to deactivate the operation of the display by said one of the user-wearable devices, upon the wireless communication module receiving data of a third predetermined hand gesture along with the unique identifier from said one of the user-wearable devices.

9. A display system operable in a non-contact manner, comprising:
a display;
a wireless communication module;
an image capturing device; and
a control device configured to:
biometrically authenticate a user through an image of the user captured by the image capturing device;
activate operation of the display by the user, upon the image capturing device capturing an image of a first predetermined gesture made by the user;
control the display to display a display element unique to the user, upon activation of the operation by the user; and
change display contents of the display while the operation is activated, upon the image capturing device capturing an image of a second predetermined gesture made by the user.

10. The display system according to claim 9, wherein the display element includes a pointer and at least one of a color and a shape of the pointer is unique to the user.

11. The display system according to claim 9 or 10, wherein
the control device is further configured to deactivate the operation of the display by the user, upon the image capturing device capturing an image of a third predetermined gesture made by the user.

12. A method for operating a display device in a non-contact manner, comprising:
detecting, by a user-wearable device attached to or around a user's hand, a first predetermined hand gesture made by the user's hand;
wirelessly transmitting data corresponding to the first predetermined hand gesture along with a unique identifier of the user-wearable device, from the user-wearable device to a wireless communication module coupled to a display device;
activating operation of the display by the user-wearable device, upon the wireless communication module receiving the data of the first predetermined hand gesture along with the unique identifier;
controlling the display device to display a display element unique to the user-wearable device, upon activation of the operation thereby; and
changing display contents of the display device based on data of a second predetermined hand gesture that is wirelessly transmitted along with the unique identifier from the user-wearable device and received by the wireless communication module.

13. The method according to claim 12, wherein
the operation by the user-wearable device is activated when no user-wearable device is activated.

14. The method according to claim 12 or 13, further comprising:
deactivating the operation of the display by the user-wearable device, upon the wireless communication module receiving data of a third predetermined hand gesture along with the unique identifier from the user-wearable device.

15. The method according to any one of claims 12 to 14, further comprising:
while the operation by the user-wearable device is activated, prevent activating operation of the display by other user-wearable devices, even upon the wireless communication module receiving data of the first predetermined hand gesture from said other user-wearable devices.
